**Europäisches Patentamt**

**European Patent Office**

**Office européen des brevets**

(19)

(11) Veröffentlichungsnummer : **0 419 406 B1**

(12)

# EUROPÄISCHE PATENTSCHRIFT

(45) Veröffentlichungstag der Patentschrift :
**20.10.93 Patentblatt 93/42**

(21) Anmeldenummer : **90810677.6**

(22) Anmeldetag : **06.09.90**

(51) Int. Cl.⁵ : **B01D 3/14,** C01B 15/013

---

(54) Destillationsanlage zur Herstellung von Wasserstoff-Peroxid.

(30) Priorität : **22.09.89 CH 3462/89**

(43) Veröffentlichungstag der Anmeldung :
**27.03.91 Patentblatt 91/13**

(45) Bekanntmachung des Hinweises auf die
Patenterteilung :
**20.10.93 Patentblatt 93/42**

(84) Benannte Vertragsstaaten :
**CH DE FR IT LI SE**

(56) Entgegenhaltungen :
**DE-B- 1 025 833**
**DE-B- 1 110 143**
**DE-B- 1 114 168**
**FR-A- 563 908**
**US-A- 2 543 001**

(73) Patentinhaber : **GEBRÜDER SULZER**
**AKTIENGESELLSCHAFT**
**Zürcherstrasse 9**
**CH-8401 Winterthur (CH)**

(72) Erfinder : **Meili, Albert**
**Hölzliweg 9**
**CH-8405 Winterthur (CH)**

EP 0 419 406 B1

## Beschreibung

Die Erfindung betrifft eine Destillationsanlage zur Herstellung von konzentriertem Wasserstoff-Peroxid (H$_2$O$_2$) mit einem Verdampfer, einem Flüssigkeitsabscheider und einer Destillationskolonne als Komponenten und eine Packung für die Destillationskolonne der Anlage.

Bei solchen bekannten Peroxidanlagen sind die einzelnen Komponenten mittels gebogener Rohre miteinander verbunden. Dabei tritt jedoch ein relativ hoher Druckabfall über die ganze Anlage auf, was wiederum notwendigerweise einen entsprechend grossen Temperaturanstieg in der Anlage bis zum Verdampfer bedingt. Vor allem aus Sicherheitsgründen sind bei der Peroxidproduktion jedoch unbedingt möglichst tiefe Temperaturen einzuhalten. Bisherige Anlagen sind überdies aufwendig gebaut und erfordern auch viel Bauraum und Gebäudeaufwand für die Schutzumhüllung. Auch deren Produktinhalt ist noch unerwünscht gross.

Aufgabe der Erfindung ist es, diese Nachteile zu überwinden und eine Anlage zu schaffen mit wesentlich reduziertem Druckabfall und tieferen Betriebs- und Maximaltemperaturen und damit grösstmöglicher Sicherheit der Anlage. Ueberdies sollen auch der Produktinhalt der Anlage, der Investitionsaufwand und der Raumbedarf reduziert werden.

Diese Aufgabe wird erfindungsgemäss gelöst durch die Anlage nach Anspruch 1 und die Packung nach Anspruch 8. Durch die kompakte Bauweise in einer Achse ohne Verbindungsleitungen, Umlenkungen und Querschnittsverengungen und durch die minimalen Druckabfall aufweisenden Komponenten, vor allem auch in der geordneten Packung der Destillationskolonne, werden ein sehr geringer totaler Druckabfall und damit tiefe Betriebstemperaturen bei wesentlich geringeren Investitionskosten und Platzbedarf erreicht. Durch die kompakte Bauweise und den geringen Druckabfall wird wiederum auch der Produktinhalt reduziert und damit insgesamt die Sicherheit und die Wirtschaftlichkeit wesentlich erhöht. Die abhängigen Ansprüche betreffen vorteilhafte Weiterbildungen der Erfindung. Bei einer besonders vorteilhaften Ausführung ist auch ein Kondensator als weitere Komponente auf die Destillationskolonne aufgesetzt und in die Baueinheit integriert. In einer weiteren Ausführung kann anstelle des Kondensators ein Verdichter als Wärmepumpe eingesetzt sein, womit besonders niedrige Betriebskosten erreicht werden können. Als Komponenten mit besonders geringem Druckabfall können ein Steigrohrverdampfer, ein Lamellen-Flüssigkeitsabscheider, und/oder ein Mischkondensator mit vollständigem Gegenstromprinzip eingesetzt werden. Sehr gute Resultate werden mit einer erfindungsgemässen Anordnung erreicht, bei welcher der totale Druckabfall weniger als 20 mbar beträgt.

Im folgenden wird die Erfindung anhand von Beispielen im Zusammenhang mit den Figuren näher erläutert. Es zeigen:

Fig. 1 eine bisherige Anlage mit separaten Komponenten;
Fig. 2 eine erfindungsgemässe Destillationsanlage schematisch;
Fig. 3 eine weitere erfindungsgemässe Anlage mit Kondensator;
Fig. 4 eine Anlage mit Wärmepumpe;
Fig. 5 das Funktionsprinzip einer erfindungsgemässen Destillationsanlage in einem (P, T)-Diagramm.

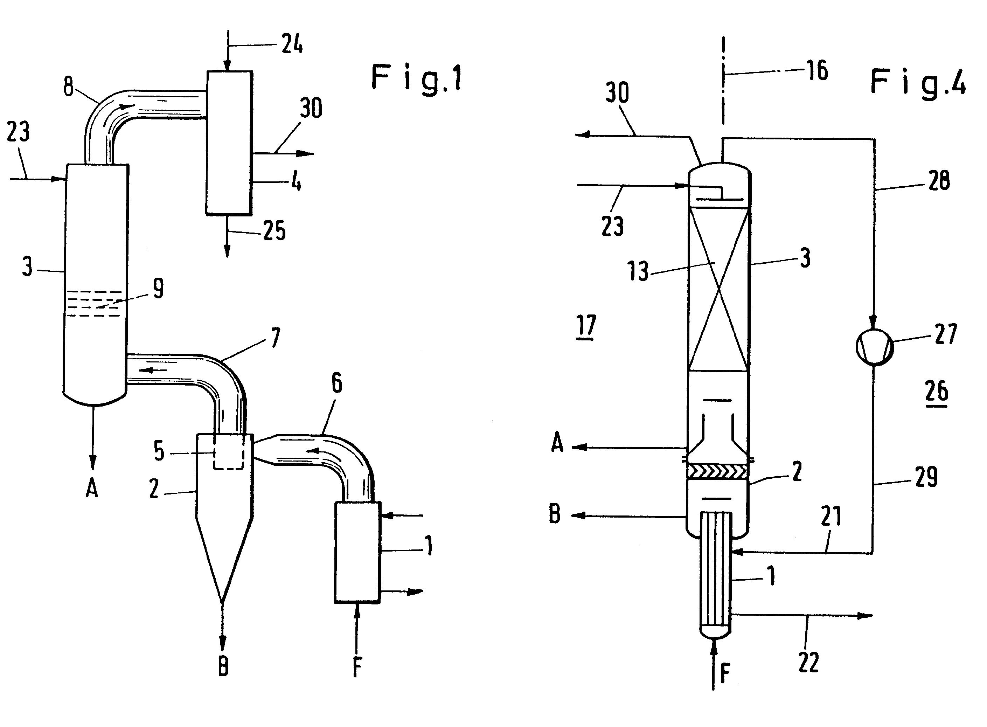

Eine bisherige Peroxid-Destillationsanlage nach Fig. 1 weist eine Einspeisung F (Zulauf) und zwei Produktausgänge A und B auf, wobei beim Produktausgang A die reine Peroxidlösung anfällt. Beispielsweise kann F = 35 %, A = 43 % rein und B = 53 % H$_2$O$_2$ betragen. Die Anlage weist die einzelnen Komponenten: Verdampfer 1, Abscheider 2, Destillationskolonne 3 und Kondensator 4 auf, welche durch die gebogenen Verbindungsleitungen 6, 7, 8 verbunden sind. Diese bekannte Anlage weist relativ hohe Druckabfälle auf, einmal durch die Biegungen und Querschnittsverringerungen der Verbindungsleitungen 6, 7, 8 wie auch in den Komponenten, so in einem Zyklon 5 als Abscheider 2 und in der Destillationskolonne mit Böden 9. In die Kolonne 3 führt der Rücklauf 23 und an den Kondensator 4 sind ein Vakuumanschluss 30 sowie eine Kühlwasserzu- und -ableitung 24, 25 angeschlossen.

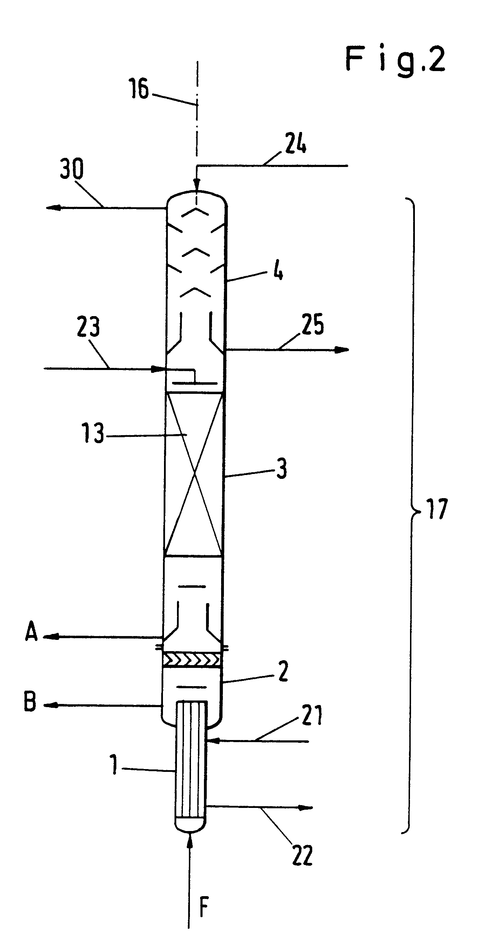

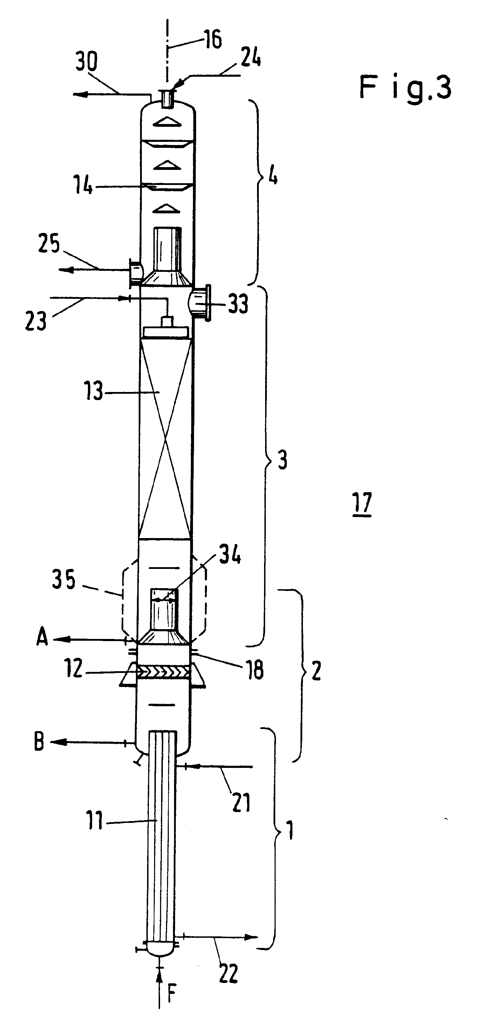

Die Figuren 2 und 3 zeigen schematisch bzw. detaillierter eine erfindungsgemässe Peroxid-Destillationsanlage, wobei die Komponenten 1 bis 4 kolonnenartig, direkt aufeinanderfolgend in einer vertikalen Achse 16 angeordnet und zu einer Baueinheit 17 zusammengefasst sind. Der Verdampfer 1 ist direkt an den Abscheider 2 und dieser als Verlängerung der Destillationskolonne 3 gebaut. Der Kondensator 4 ist auf die Destillationskolonne 3 aufgesetzt. Als Komponenten mit geringem Strömungswiderstand bzw. Druckabfall sind hier ein Steigrohrverdampfer 11 mit einer Dampfzuleitung 21 und einer Kondensatableitung 22, ein Lamellen-Flüssigkeitsabscheider 12, ein Mischkondensator 14 mit vollständigem Gegenstromprinzip und vor allem eine geordnete Kolonnenpackung 13 mit grosser Oberfläche eingesetzt, z.B. eine Sulzerpackung, Mellapak® usw. Zur einfachen Montage kann die Baueinheit 17 aus zwei Teilen bestehen, welche mittels nur eines Flanschs 18 zusammengefügt werden. Damit können auch die Dichtigkeitsprobleme bisheriger, mehrfach zusammengesetzter Anlagen (Fig. 1) überwunden werden. Die Anlage kann aber auch ohne Flansch 18 als einteilige, verschweisste Baueinheit 17 ausgeführt werden, beispielsweise mit einem Mannloch 33 für Inspektionen. Vorzugsweise ist die Anlage entweder ganz aus Reinaluminium oder aus rostfreiem Stahl gefertigt. Zur Erhöhung des Durchflusses in der Anlage kann z.B. der Durchgangsquerschnitt 34 im unteren Teil der Kolonne 3 auch vergrössert werden bei gleichzeitiger Verbreiterung 35 der Kolonnenwand.

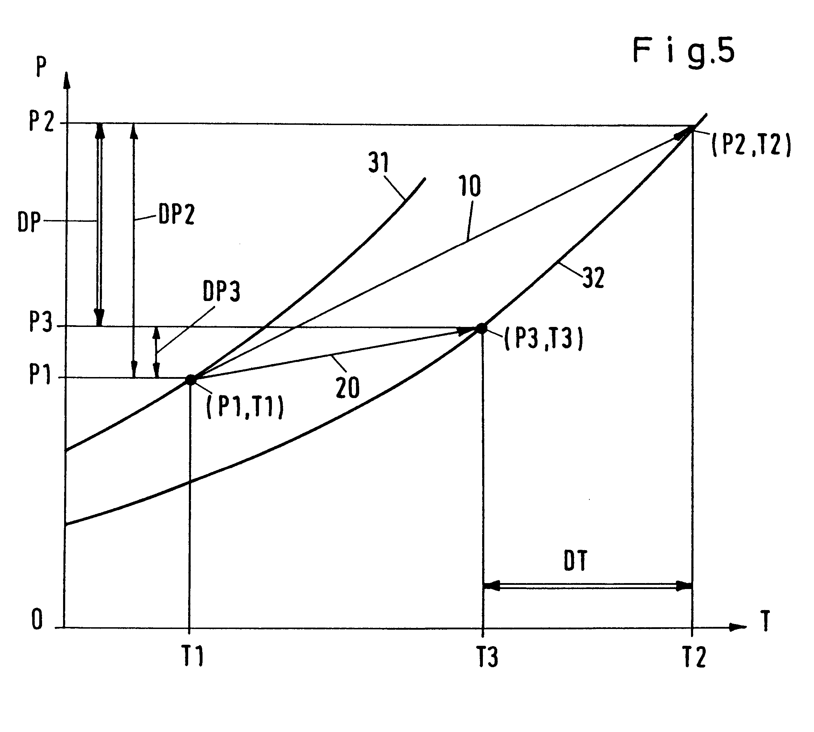

Fig. 4 zeigt eine erfindungsgemässe Destillationsanlage bei der anstelle des Kondensators 4 eine Wärmepumpe 26 eingesetzt ist. Diese besteht aus einem Verdichter 27, z.B. als ein- oder zweistufiger Radialverdichter, welcher über die Leitungen 28, 29 mit Kolonne 3 und Verdampfer 1 verbunden ist und welcher die Brüden des Kolonnenkopfs soweit auf einen erhöhten (P, T)-Wert verdichtet, dass dieser zur Beheizung des Verdampfers 1 ausreicht. Nur dank der erfindungsgemässen Konzeption der Anlage mit sehr geringem Druckabfall ist es wirtschaftlich überhaupt möglich und sinnvoll, eine Wärmepumpe in dieser Art einzusetzen. Mit einer solchen Anlage gemäss Fig. 4 können jedoch die Betriebskosten nochmals deutlich gesenkt werden.

Fig. 5 zeigt anhand eines (P, T)-Diagramms die Verbesserung, welche mit erfindungsgemässen Anlagen (20) gegenüber bisherigen Anlagen (10) erreicht werden kann. 31 stellt die Dampfdruckkurve von Wasser und 32 die Dampfdruckkurve einer $H_2O_2$-Lösung dar. Der Punkt (P1, T1) mit dem Druck P1 und der Temperatur T1 gibt dabei die Kopfwerte im Kondensator (bzw. der Destillationskolonne für Fig. 4) an. P und T steigen entlang der Anlage gemäss den Pfeilen 10 für bisherige bzw. 20 für erfindungsgemässe Anlagen. Die relativ hohen Maximalwerte von bisherigen Anlagen sind mit (P2, T2) bezeichnet. Demgegenüber werden mit erfindungsgemässen Destillationsanlagen nur die erheblich kleineren Maximalwerte (P3, P3) erzeugt. Damit wird der grosse Druckabfall DP2 einer bisherigen Anlage auf nur einen Bruchteil entsprechend DP3 mit erfindungsgemässen Anlagen reduziert. Die resultierende Reduktion DT der Temperatur wie auch des Druckabfalls DP bedeuten entsprechend massive Verbesserungen der Anlagensicherheit und der Wirtschaftlichkeit. Ausgehend von Kopfwerten P1 = 60 mbar und T1 = 36° betragen die Werte für bisherige Anlagen beispielsweise: T2 = 60°C, P2 = 120 mbar mit einer Druckdifferenz DP2 von 60 mbar.

Mit neuen Anlagen werden beispielsweise folgende Werte erreicht: P3 = 72 mbar, T3 = 50°C und damit einer Druckdifferenz DP3 von 12 mbar. Die erfindungsgemässe Reduktion des Druckabfalls DP beträgt hier also 48 mbar und die Temperaturreduktion DT = 10°C.

**Bezeichnungsliste**

| | |
|---|---|
| 1 | Verdampfer |
| 2 | Flüssigkeitsabscheider |
| 3 | Destillationskolonne |
| 4 | Kondensator |
| 1, 2, 3, 4 | Komponenten |
| 6, 7, 8 | Verbindungsleitungen zwischen den Komponenten |
| 5 | Zyklon |
| 9 | Bodenkolonne |
| 10 | Kurve alt, bisher |
| 11 | Steigrohrverdampfer |
| 12 | Lamellen-Flüssigkeitsabscheider |
| 13 | geordnete Packung |
| 14 | Mischkondensator mit vollständigem Gegenstrom |
| 16 | vertikale Achse |
| 17 | Baueinheit |
| 18 | Flansch |
| 20 | Kurve neu |
| 21 | Dampf-Zuleitung |
| 22 | Kondensatableitung |
| 23 | Rücklauf ($H_2O$) |
| 24, 25 | Kühlwasser, Zu- und Ableitung |
| 26 | Wärmepumpe |
| 27 | Verdichter |

| 28, 29 | Verbindungsleitungen zu 1 und 3 |
|---|---|
| 30 | Vakuumanschluss |
| 31 | Dampfdruckkurve $H_2O$ |
| 32 | Dampfdruckkurve $H_2O_2$-Lösung |
| 33 | Mannloch |
| 34 | Durchgangsquerschnitt |
| 35 | Verbreiterung |
| A, B | Produktausgang |
| F | Einspeisung (Zulauf) |
| P | Druck |
| T | Temperatur |
| T1, P1 | Kopfwerte |
| T2, P2, DP2 | alt Maximalwerte |
| T3, P3, DP3 | neu Maximalwerte |
| DP = P2 - P3 | alt-neu Differenz |
| DT = T2 - T3 | |

**Patentansprüche**

1. Destillationsanlage zur Herstellung von konzentriertem Wasserstoff-Peroxid ($H_2O_2$) mit einem Verdampfer (1), einem Flüssigkeitsabscheider (2) und einer Destillationskolonne (3) als Komponenten, dadurch **gekennzeichnet,** dass die Komponenten (1, 2, 3) in einer vertikalen Achse (16) nacheinander angeordnet und zu einer Baueinheit (17) zusammengefasst sind ohne Verbindungsleitungen zwischen den Elementen (1, 2, 3), wobei der Verdampfer (1) direkt an den Abscheider (2) und der Abscheider (2) als Verlängerung der Destillationskolonne (3) gebaut sind, dass alle Komponenten einen geringen Druckabfall aufweisen und dass die Destillationskolonne (3) eine geordnete Packung (13) aufweist.

2. Destillationsanlage nach Anspruch 1, gekennzeichnet durch einen Kondensator (4) als weitere Komponente, welcher direkt auf der Destillationskolonne (3) aufgesetzt und damit in die Baueinheit (17) integriert ist.

3. Destillationskolonne nach Anspruch 1, gekennzeichnet durch eine Wärmepumpe (26) in Form eines Verdichters (27), welcher über Leitungen (28, 29) mit dem Kopf der Destillationskolonne (3) und dem Verdampfer (1) verbunden ist.

4. Destillationskolonne nach Anspruch 2, gekennzeichnet durch einen Mischkondensator (14) mit vollständigem Gegenstromprinzip.

**5.** Destillationsanlage nach Anspruch 1, gekennzeichnet durch einen Steigrohrverdampfer (11).

**6.** Destillationsanlage nach Anspruch 1, gekennzeichnet durch einen Lamellen-Flüssigkeitsabscheider (12).

**7.** Destillationsanlage nach Anspruch 1, dadurch gekennzeichnet, dass der totale Druckabfall (DP3) der Komponenten weniger als 20 mbar beträgt.

**8.** Verwendung einer geordneten Packung für die Destillationskolonne (3) einer Destillationsanlage nach einem der Ansprüche 1 bis 7.


## Claims

**1.** A distillation plant for producing concentrated hydrogen peroxide ($H_2O_2$), the main components being an evaporator (1), a liquid separator (2) and a distillation column (3), characterised in that the components (1, 2, 3) are disposed one behind the other along a vertical axis (16) and combined in a structural unit (17) without connecting lines between the components (1, 2, 3), the evaporator (1) being constructed directly on the separator (2) and the separator (2) prolonging the distillation column (3), in that all the components have a small pressure drop and in that the distillation column (3) has a regular packing (13).

**2.** A distillation plant according to claim 1, characterised by an additional component in the form of a condenser (4) which is directly mounted on the distillation column (3) and thus incorporated in the structural unit (17).

**3.** A distillation column according to claim 1, characterised by a heat pump (26) in the form of a compressor (27) connected by lines (28, 29) to the evaporator (1) and the head of the distillation column (3).

**4.** A distillation column according to claim 2, characterised by a mixing condenser (14) with a complete counter-current system.

**5.** A distillation plant according to claim 1, characterised by a rising-pipe evaporator (11).

**6.** A distillation plant according to claim 1, characterised by a lamellar liquid separator (12).

**7.** A distillation plant according to claim 1, characterised in that the total pressure drop (DP3) of the components is less than 20 mbar.

**8.** Use of a regular packing for the distillation column (3) of a distillation plant according to any of claims 1 to 7.


## Revendications

**1.** Installation de distillation pour la production de peroxyde d'hydrogène ($H_2O_2$) concentré, comportant comme composants un évaporateur (1), un séparateur de liquide (2) et une colonne de distillation (3), caractérisée en ce que les composants (1, 2, 3) sont disposés en succession dans un axe vertical (16) et sont réunis en une unité de construction (17) sans conduits de liaison entre les éléments (1, 2, 3), l'évaporateur (1) étant en prise directe sur l'évaporateur (2) et ce dernier étant monté comme prolongement de la colonne de distillation (3), en ce que touts les composants présentent une faible chute de pression et en ce que la colonne de distillation (3) présente une garniture ordonnée (13).

**2.** Installation de distillation suivant la revendication 1, caractérisée par un condenseur (4) en tant qu'autre composant qui est monté directement sur la colonne de distillation (3) et qui est donc intégré à l'unité de construction (17).

**3.** Colonne de distillation suivant la revendication 1, caractérisée par une pompe à chaleur (26) sous forme d'un compresseur (27) qui communique par des conduits (28, 29) avec la tête de la colonne de distillation (3) et l'évaporateur (1).

**4.** Colonne de distillation suivant la revendication 2, caractérisée par un co-condenseur (14) opérant totalement suivant le principe du contre-courant.

5. Installation de distillation suivant la revendication 1, caractérisée par un évaporateur (11) à tube ascendant.

6. Installation de distillation suivant la revendication 1, caractérisée par un séparateur de liquide (12) à lamelles.

7. Installation de distillation suivant la revendication 1, caractérisée en ce que la chute totale de pression (DP3) des composants s'élève à moins de 20 mbars.

8. Utilisation d'une garniture ordonnée pour colonne de distillation (3) d'une installation de distillation suivant l'une des revendications 1 à 7.

Fig.4

Fig.1

# Fig.2

F i g . 3

Fig.5